# EUROPÄISCHE PATENTANMELDUNG

(11) **EP 0 644 099 A2**
(43) Veröffentlichungstag der Anmeldung: **22.03.1995**
(21) Anmeldenummer: 94113389.4
(22) Anmeldetag: 26.08.1994
(51) Int. Cl.: G07F 7/06

(54) **Einkaufs- oder Gepäckwagen mit Schloss**

(30) Priorität: 18.09.1993 DE 4331753
(71) Anmelder: VENDORET HOLDING S.A., L-5801 Luxemburg-Hesperange (LU)
(72) Erfinder: Merchel, Horst, D-74321 Bietigheim-Bissingen (DE)
(74) Vertreter: COHAUSZ HASE DAWIDOWICZ & PARTNER

(57) **Zusammenfassung**

Einkauf- oder Gepäckwagen mit einem am Wagen befestigten Schloß, durch das ein Wagen an einem benachbarten Wagen ankoppelbar ist. Das Schloß verhindert ein Lösen des Wagens vom anderen so lange, bis das Schloß betätigt wird, wobei das Schloß zu seinem Entsperren und Lösen des Wagens durch einen in das Schloß einsteckbaren Schlüssel betätigbar ist.

## Beschreibung

Die Erfindung betrifft einen Einkauf- oder Gepäckwagen mit einem am Wagen befestigten Schloß, durch das ein Wagen an einem benachbarten Wagen ankoppelbar ist, wobei das Schloß ein Lösen des Wagens vom anderen so lange verhindert, bis das Schloß betätigt wird.

Es ist bekannt, Kopplungsschlösser von Einkaufswagen durch ein Pfand in Form einer Münze zu öffnen, so daß ein Wagen vom anderen entkoppelt wird. Hierbei bleibt die Münze so lange im Schloß arretiert, bis der Wagen wieder an einen anderen Wagen oder an eine Station angekoppelt wird. Häufig ist für den Einkaufenden nicht immer eine Münze zur Hand, so daß die Suche nach einer Münze beim Einkaufenden zu einer Verärgerung führt, ehe er einen Einkaufswagen benutzen kann.

Aufgabe der Erfindung ist es, ein Kopplungsschloß eines Einkauf- oder Gepäckwagens so zu verbessern, daß eine Münze nicht unbedingt erforderlich und die Schloßsicherheit erhöht ist.

Diese Aufgabe wird erfindungsgemäß dadurch gelöst, daß das Schloß zu seinem Entsperren und Lösen des Wagens durch einen in das Schloß einsteckbaren Schlüssel betätigbar ist.

Ein durch einen Schlüssel betätigbares Kopplungsschloß hat eine besonders einfache und sichere Konstruktion und Handhabung zumal bekannte und bewährte Konstruktionsteile verwendet werden können. Darüberhinaus kann der Einkaufende zum ständigen Inhaber eines für alle Einkaufswagen passenden Schlüssels werden, so daß er in einer privilegierten Stellung ist und eine enge Verbindung zu der Stelle hat, die die Einkaufswagen besitzen.

Besonders vorteilhaft ist es, wenn der Schlüssel zum Entsperren drehbar ist, so daß das Schloß einen Zylinderkern mit Zuhaltungen aufweist, in dessen Schlüsselkanal der Schlüssel einschiebbar ist.

Vorzugsweise wird vorgeschlagen, daß das Schloß zusätzlich zum Schlüssel auch durch eine Münze und/oder durch eine Karte betätigbar ist, so daß das Schloß auch von Einkäufern benutzt werden kann, die keinen Schlüssel haben. Auch ist es besonders vorteilhaft, wenn der Schlüssel zu allen Einkaufswagenschlössern einer Stelle insbesondere eines Geschäftes paßt.

Ein Ausführungsbeispiel der Erfindung wird im folgenden näher beschrieben.

Übliche Einkauf- oder Gepäckwagen besitzen vier Räder und einen Drahtkorb, in den Teile gelegt werden können. Gepäckwagen besitzen darüberhinaus eine Ladefläche für Gepäckstücke. Die Wagen können ineinander geschoben werden, so daß sie an einer Station wenig Platz benötigen.

Im ineinandergeschobenen Zustand sind die Wagen aneinandergekoppelt. Hierzu besitzt jeder Wagen ein an ihm befestigtes Kopplungsschloß, das ein in der Schloß eingestecktes Kopplungsteil des benachbarten Wagens arretierend festhält. Um diese Arretierung aufzuheben wird in das Schloß ein Schlüssel eingesteckt und durch Eindrücken und/ oder Drehen des Schlüssels wird das Kopplungsteil des benachbarten Wagen gelöst, so daß der Wagen aus der Wagenreihe entnommen werden kann. Hierbei bleibt der Schlüssel solange im Schloß unentnehmbar und damit arretiert eingesteckt, bis der Wagen wieder an einen anderen Wagen angekoppelt insbesondere eingeschoben wird und das Kopplungsteil des anderen Wagens in das Schloß des Wagens eingesteckt wird. Dies führt zu einem Lösen der Arretierung des Schlüssels, so daß der Schlüssel aus dem Schloß gezogen werden kann.

Das Schloß kann einen Zylinderkern mit Zuhaltungen aufweisen, in dessen Schlüsselkanal der Schlüssel einschiebbar und drehbar ist, so daß bei zu den Zuhaltungen passendem Schlüssel ein Drehen des Schlüssels dazu führt, daß das Kopplungsteil des anderen Wagens aus dem Schloß entnehmbar ist.

In einer weiteren Alternative kann das Schloß zusätzlich zum Schlüssel auch durch eine Münze und/oder durch eine Karte betätigbar sein, so daß ein Entkoppeln auch durch eine Münze und/oder Karte erreichbar ist.

Der vom Käufer bzw. vom Gepäckwagenbenutzer verwendete Schlüssel paßt zu allen Einkaufswagenschlössern einer Stelle insbesondere eines Geschäftes oder eines Bahnhofs/Flughafens, wobei noch unterschieden werden kann, daß der Schlüssel nur zu einem bestimmten Bereich einer Stelle gehört.

## Patentansprüche

1. Einkauf- oder Gepäckwagen mit einem am Wagen befestigten Schloß, durch das ein Wagen an einem benachbarten Wagen ankoppelbar ist, wobei das Schloß ein Lösen des Wagens vom anderen so lange verhindert, bis das Schloß betätigt wird, **dadurch gekennzeichnet,** daß das Schloß zu seinem Entsperren und Lösen des Wagens durch einen in das Schloß einsteckbaren Schlüssel betätigbar ist.

2. Wagen nach Anspruch 1, **dadurch gekennzeichnet,** daß der Schlüssel zum Entsperren drehbar ist.

3. Wagen nach Anspruch 2, **dadurch gekennzeichnet,** daß das Schloß einen Zylinderkern mit Zuhaltungen aufweist, in dessen Schlüsselkanal der Schlüssel einschiebbar ist.

4. Wagen nach einem der vorherigen Ansprüche, **dadurch gekennzeichnet,** daß das Schloß zusätzlich zum Schlüssel auch durch eine Münze und/oder durch eine Karte betätigbar ist.

5. Wagen nach einem der vorherigen Ansprüche, **dadurch gekennzeichnet,** daß der Schlüssel zu allen Einkaufswagenschlössern einer Stelle insbesondere eines Geschäftes paßt.
